# EUROPEAN PATENT APPLICATION

(11) **EP 4 501 105 A1**
(43) Date of publication of application: **05.02.2025**
(21) Application number: 23781053.6
(22) Date of filing: 31.03.2023
(51) Int. Cl.: A01K 29/00, G06T 7/00, G06T 7/70

(54) **INFORMATION PROCESSING DEVICE, INFORMATION PROCESSING METHOD, AND PROGRAM**

(30) Priority: 31.03.2022 JP 2022059718
(71) Applicant: FURUKAWA ELECTRIC CO., LTD., Tokyo 100-8322 (JP)
(72) Inventor: YAMASAKI, Miku, Tokyo 100-8322 (JP); ODAKA, Kunio, Tokyo 100-8322 (JP); KISE, Tomofumi, Tokyo 100-8322 (JP); FUKUSHIMA, Masayuki, Tokyo 100-8322 (JP); NARUI, Hirokazu, Tokyo 100-8322 (JP); NAKAI, Yukako, Tokyo 100-8322 (JP); ISHII, Takayuki, Tokyo 100-8322 (JP)
(74) Representative: Papula Oy
(86) International application number: PCT/JP2023/013530
(87) International publication number: WO 2023/191045

(57) **Abstract**

The present invention enables, on the basis of a captured image of an animal in a prescribed region, individual recognition of the animal in the captured image. An animal appearance determination device 100 comprises: an image data analysis unit 112 which acquires a captured image including cattle being raised in a cattle barn and acquires, as first positional information, a position of an individual cattle in the cattle barn calculated on the basis of an image of the individual cattle in the captured image; a positional data analysis unit 114 which acquires identification information obtained from a sensor device 200 attached to the individual cattle and second positional information indicative of the position of the individual cattle in the cattle barn; and an individual recognition unit 115 which, if the difference between the first positional information and the second positional information is determined to be not more than a predetermined threshold, records the first positional information and the identification information on the second positional information in association with the each other.

## Description

### TECHNICAL FIELD

The present invention relates to an information processing device, an information processing method, and a program.

### BACKGROUND ART

In order to maintain stable dairy farming management, it has become important to efficiently manage the health of the animals being bred. For example, Patent Document 1 discloses a livestock disease management system that includes: a feeding condition acquisition unit that acquires feeding condition information including image information on captured images of livestock; and a disease risk estimation unit that extracts the livestock appearing in the image information acquired by the feeding condition acquisition unit, analyzes the condition of the livestock, and estimates the disease risk, based on the condition of the livestock. Patent Document 2 discloses a behavior amount calculation program that causes a computer to execute the processing of: acquiring a plurality of captured images including a plurality of animals, detecting the movement of objects attached to each of the plurality of animals, based on the plurality of captured images, and calculating the behavior amount of each of the plurality of animals, based on the detected movement of the objects.

### Citation List

### Patent Document

Patent Document 1: Japanese Unexamined Patent Application, Publication No. 2021-135956
Patent Document 2: Japanese Unexamined Patent Application, Publication No. 2018-148843

### DISCLOSURE OF THE INVENTION

### Problems to be Solved by the Invention

However, although the technology disclosed in Patent Document 1 can estimate the disease risk as a group, there was a problem that the disease risk cannot be estimated on individual basis, or the health conditions cannot be managed on individual basis. The technology disclosed in Patent Document 2 involves a problem that the accuracy in identifying individuals may decrease when the number of livestock as observation targets increases or when the attached objects cannot be identified in the images.

One of the objects of the present invention is to provide an information processing device, an information processing method, and a program, which are capable of accurately identifying the location of an animal in a specific region, based on captured images of the animal in the specific region, thereby allowing for individual identification of the animal associated with the captured images.

### Means for Solving the Problems

One aspect of the present invention is an information processing device, which includes: a first location information acquisition unit that acquires a captured image including an animal being bred within a predetermined breeding area, and acquires, as first location information, a location of the animal within the breeding area, calculated based on the image of the animal in the captured image; a second location information acquisition unit that acquires, from a terminal device provided on the animal, identification information on the animal and second location information indicating the location of the animal within the breeding area; and an individual identification unit that, in a case of determining that a difference between the first location information and the second location information is below or equal to a predetermined threshold, associates and records the first location information and the identification information related to the second location information.

The information processing device may include an appearance determination unit that executes determination on preset appearance determination items regarding an appearance of the animal, based on the captured image of the animal, uses a determination result thereof as appearance information on the animal, acquires the first location information calculated from the image of the animal that is a target of the determination, and associates and records the identification information related to the first location information and the appearance information.

The appearance determination unit may determine an appearance of the animal using a trained model that has been pre-trained with a relationship between an image acquired of the animal and appearance information that is the determination result for the preset appearance determination items.

The appearance determination unit may determine an appearance of the animal, based on an image acquired of the animal and a preset criterion for determining a feature of the animal in the image related to the appearance determination items.

The second location information can be calculated based on a direction of arrival of radio waves transmitted from the terminal device provided on the animal.

The appearance information on each individual animal chronologically recorded by the appearance determination unit may be used for predicting a point in time of at least one of disease, estrus, calving, growth, or weaning of the animal.

Another aspect of the present invention is an information processing method to execute: processing of acquiring a captured image including an animal being bred within a predetermined breeding area, and acquiring, as first location information, a location of the animal within the breeding area calculated based on an image of the animal in the captured image; processing of acquiring, from a terminal device provided on the animal, identification information on the animal and second location information indicating a location of the animal within the breeding area; and processing of associating and recording the first location information and the identification information related to the second location information, in a case of determining that a difference between the first location information and the second location information is below or equal to a predetermined threshold.

Still another aspect of the present invention is a program that causes an information processing device to execute: processing of acquiring a captured image including an animal being bred within a predetermined breeding area, and acquiring, as first location information, a location of the animal within the breeding area calculated based on an image of the animal in the captured image; processing of acquiring, from a terminal device provided on the animal, identification information on the animal and second location information indicating a location of the animal within the breeding area; and processing of associating and recording the first location information and the identification information related to the second location information, in a case of determining that a difference between the first location information and the second location information is below or equal to a predetermined threshold.

### Effects of the Invention

According to the present invention, it is possible to identify the location of an animal in a specific region, based on captured images of the animal in the specific region, and it is also possible to execute individual identification of the animal associated with the captured images.

### BRIEF DESCRIPTION OF THE DRAWINGS

FIG. 1 is a schematic diagram illustrating the overall configuration of an animal appearance determination system according to one embodiment of the present invention;
FIG. 2 is a block diagram illustrating the functional outline of the animal appearance determination system according to one embodiment of the present invention;
FIG. 3 is a block diagram illustrating the hardware and functional block configuration of an animal appearance determination device according to one embodiment of the present invention;
FIG. 4 is a block diagram illustrating the hardware and functional block configuration of a sensor device and a location detector according to one embodiment of the present invention;
FIG. 5 is an explanatory diagram illustrating an example of processing an image captured of an animal;
FIG. 6 is a schematic diagram comparing the location of the animal identified from the image and the location of the animal identified from the identification information from the sensor device;
FIG. 7 is an explanatory diagram illustrating examples of appearance determination items;
FIG. 8 is a diagram illustrating an example configuration of an appearance determination data storage unit;
FIG. 9 is a diagram illustrating an example configuration of a location information storage unit;
FIG. 10 is a diagram illustrating an example configuration of an appearance information storage unit;
FIG. 11 is a diagram illustrating an example configuration of a processing target data storage unit;
FIG. 12 is a flowchart illustrating an example of the location information calculation processing executed by the animal appearance determination device according to one embodiment of the present invention; and
FIG. 13 is a flowchart illustrating an example of the appearance determination processing executed by the animal appearance determination device according to one embodiment of the present invention.

### PREFERRED MODE FOR CARRYING OUT THE INVENTION

Hereinafter, the present invention according to the embodiments will be described with reference to the attached drawings. The following embodiments do not limit the present invention. The drawings referred to in the following description schematically show shapes, sizes, and positional relationships to the extent that the details of the present disclosure can be understood. In other words, the present invention is not limited to the shapes, sizes, and positional relationships illustrated as examples in the drawings.

### (Embodiments)

### <Animal Appearance Determination System 1>

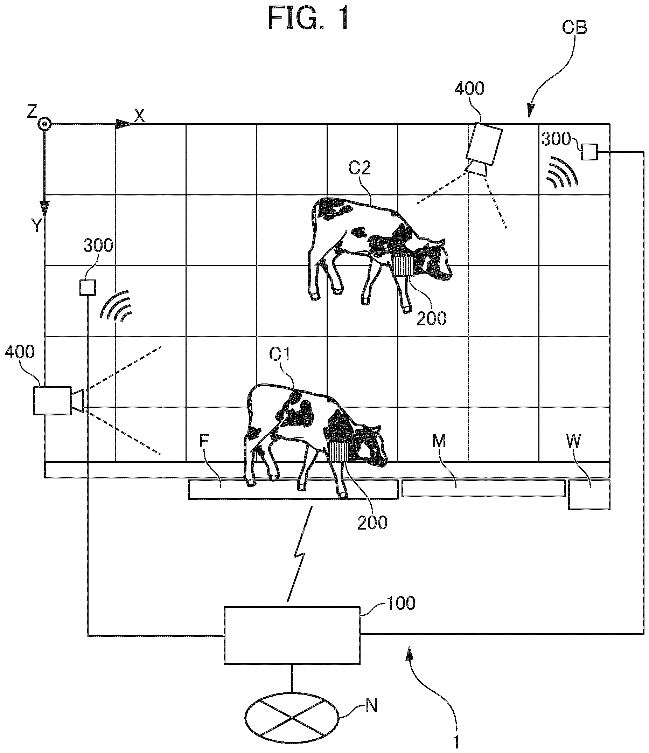

FIG. 1 is a schematic diagram illustrating the overall configuration of an animal appearance determination system 1 according to one embodiment of the present invention. As illustrated in FIG. 1, the animal appearance determination system 1 of the present embodiment includes, for example, the function of chronologically recording the appearance information, which is results of determining predetermined appearance determination items, based on images captured of cows C being bred by a dairy farmer, for each individual animal. The animals as the recording target are not limited to the cows C, and may include all animals that benefit from acquiring and utilizing the appearance information, animals falling into the category of so-called industrial animals such as pigs, sheep, horses, and goats, animals being bred in zoos, and so-called pet animals. In the present embodiment, the appearance determination items include four items, "ear position", "eye openness", "head position", and "back curvature". The appearance determination items are not limited to those described above, and can be appropriately set based on the target animals or the purpose of using the appearance information.

FIG. 1 is a plan view schematically illustrating a single rectangular cattle barn CB arranged in a cowhouse. For simplicity, FIG. 1 illustrates a situation where two cows C1 and C2 are bred within the cattle barn CB.

In the cattle barn CB, a feeding area F, a milk-feeding area M, and a water-drinking area W are provided at appropriate places, allowing the cows C1 and C2 to eat, suckle, and drink water at each place. The arrangement of the feeding area F, the milk-feeding area M, and the water-drinking area W in the cattle barn CB is not limited to the example illustrated in FIG. 1 and can be appropriately set up.

A sensor device 200 for monitoring biological information such as behavior and heart rate is attached to each of the cows C1 and C2. Each sensor device 200 is assigned unique identification information, which is used as identification information on each cow. The sensor device 200 includes a data transmission function, in which the data acquired from the sensor device is transmitted together with the identification information, for example, via near-field communication (NFC).

An animal appearance determination device 100, which is an information processing device that implements the main functions for determining animal appearance in the present embodiment, is installed near the cowhouse including the cattle barn CB, for example, in a management building of the dairy farmer. The animal appearance determination device 100 receives various data and identification information from the sensor devices 200 attached to the cows C and utilizes this information to identify the locations of the cows C within the cattle barn CB.

The cattle barn CB is provided with location detectors 300, which receive radio waves transmitted from sensor devices 200 and generate data for the animal appearance determination device 100 to analyze the locations of the transmitting sensor devices 200, i.e., the locations of the cows C1 and C2 within the cattle barn CB. In the example illustrated in FIG. 1, two location detectors 300 installed at appropriate locations in the cattle barn CB detect arrival angles of radio waves from the sensor devices 200 and transmit this data to the animal appearance determination device 100. The animal appearance determination device 100 uses the angle data from each location detector 300 to analyze and acquire the locations of the cows C within the cattle barn CB. As illustrated in FIG. 1, for convenience, an X-axis and a Y-axis defining a plane coordinate system, and a Z-axis perpendicular thereto, can be set up within the cattle barn CB. The animal appearance determination device 100 may be configured to be communicable with external communication networks N such as the Internet, WAN, or LAN. The configurations and functions of the animal appearance determination device 100, the sensor device 200, and the location detector 300 will be described later with reference to the relevant drawings.

One or more cameras 400 for capturing images of the cows C are installed in the cattle barn CB. It is desirable to regularly capture images of the cows C being bred within the cattle barn CB. Therefore, it is preferable to install the cameras 400 at locations in the cattle barn CB where the cows C appear regularly (e.g., near the feeding area or water-drinking area), so that images of the cows C within the cattle barn CB can be acquired regularly. The cameras 400 are digital cameras with image sensors such as CCDs, which capture moving images inside the cattle barn CB or still images at predetermined time intervals and transmit the image data to the animal appearance determination device 100.

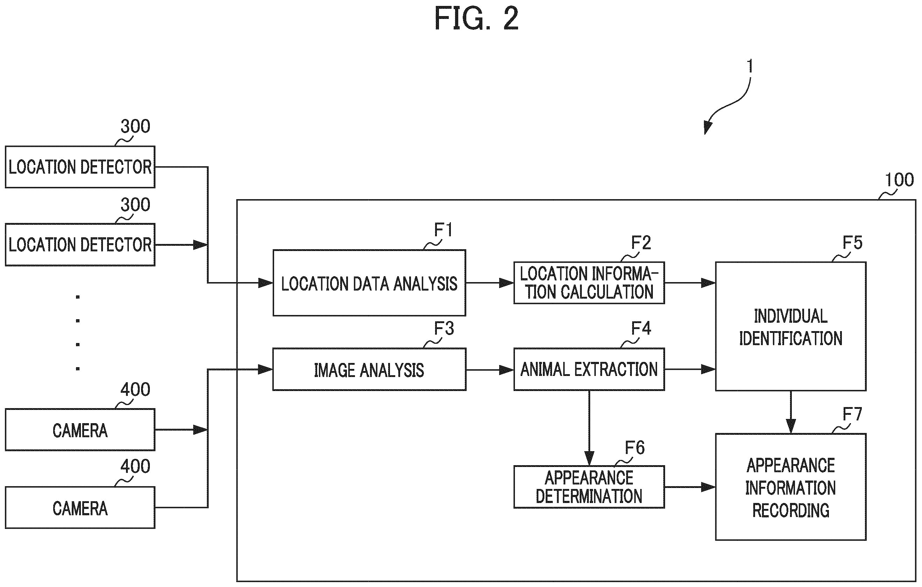

FIG. 2 illustrates the schematic configuration and functions of the animal appearance determination system 1 illustrated in FIG. 1. The animal appearance determination system 1 of the present embodiment includes the animal appearance determination device 100. The animal appearance determination device 100 receives the radio wave arrival angle data from the location detectors 300 installed in the cattle barn CB, along with the identification information on the sensor devices 200. The identification information on the sensor devices 200 is included in the data received by the location sensors 300 from the sensor devices 200. The animal appearance determination device 100 analyzes the input radio wave arrival angle data and the installation locations of the location detectors 300 by way of the location data analysis function F1, and calculates the location information on the sensor devices 200 in the cattle barn CB by way of the location information calculation function F2. Since the identification information on the sensor devices 200 is linked to each cow C, the location information on the sensor device 200 represents the location of the cow C, to which the sensor device 200 is attached, in the cattle barn CB.

On the other hand, the animal appearance determination device 100 acquires image data of the cattle barn CB captured by the camera 400. The acquired image data is analyzed by way of the image analysis function F3, and the image of each cow C contained in each image is extracted by way of the animal extraction function F4. At this time, the location of each cow C in the image is calculated. The location of the cow C in the image is converted to the actual location in the cattle barn CB, based on the installation location, the imaging direction, and the angle of view of the camera 400 that captured the image.

By way of the individual identification function F5, the location information (second location information) based on the signal received from the sensor device 200 is compared with the location information (first location information) in the cattle barn CB acquired by conversion from the location of the cow C in the image. In a case of having determined that there is a correspondence relationship between the location information based on the image and the location information based on the signal from the sensor device 200, the image is identified as the image of the cow C, to which the sensor device 200 identified as having a correspondence relationship is attached. As mentioned earlier, since the identification information on the sensor device 200 is associated with the individual information on each cow C, the image is associated with the individual information on the cow C. There is a correspondence relationship between the location information based on the image and the location information based on the signal from the sensor device 200, which means that the difference (distance) between the locations in the cattle barn CB specified by each location information is below or equal to a predetermined threshold. In other words, when the location in the cattle barn CB indicated by the location information based on the image and the location in the cattle barn CB indicated by the location information based on the signal from the sensor device 200 are within a certain range, it is determined that the correspondence relationship exists. The threshold can be appropriately set based on the target animal or other factors, but in the case of cows in the present embodiment, the threshold can be set on the order of several tens of centimeters.

The image of the cow C extracted from each image by way of the animal extraction function F4 is subjected to determination processing by way of the appearance determination function F6 from the viewpoint of appearance. As mentioned earlier, the appearance determination items include four items, "ear position", "eye openness", "head position", and "back curvature", and the appearance determination function F6 executes quantitative determination for each appearance determination item, based on the image of the cow C. The image of the cow C associated with the individual information by way of the individual identification function F5 and the determination result based on the image of each cow C acquired by way of the appearance determination function F6 are chronologically recorded by way of the appearance information recording function F7.

<Animal Appearance Determination Device 100, Sensor Device 200, Location Detector 300>

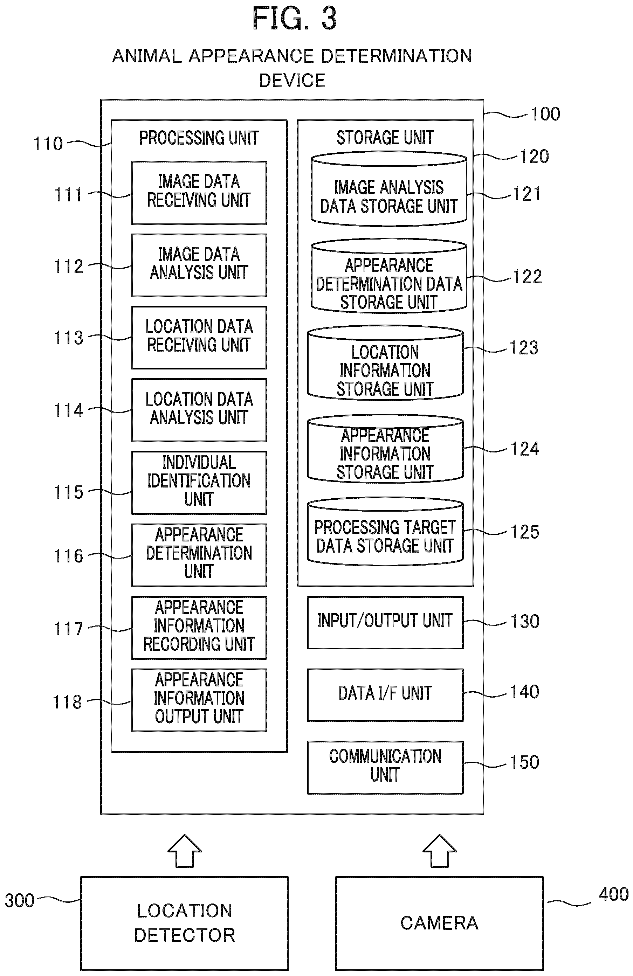

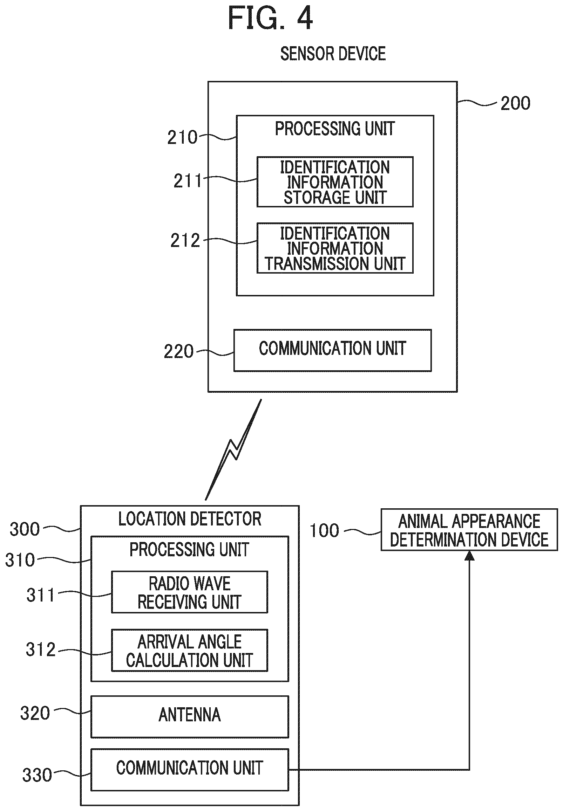

Next, the configuration and functions of the animal appearance determination device 100, the sensor device 200, and the location detector 300 according to the present embodiment will be specifically described. FIGS. 3 and 4 are block diagrams illustrating the hardware and functional block configurations of the animal appearance determination device 100, the sensor device 200, and the location detector 300 according to the present embodiment.

### <<Sensor Device 200, Location Detector 300>>

First, referring to FIG. 4, the sensor device 200 and the location detector 300 according to the present embodiment will be described. The sensor device 200 is attached to an appropriate part of the body of the cow C, and includes a device that converts the movement of the cow C, which is included in the behavior of the cow C, into physical quantities and outputs the results. In the present embodiment, the sensor device 200 is fixed to a collar attached to the neck of the cow C, but can also be configured to be attached to other parts such as the ear.

In the present embodiment, the sensor device 200 functions as a terminal device that allows the animal appearance determination device 100 to acquire the location of the sensor device 200. Therefore, in the present embodiment, the sensor device 200 only needs to include the function as a terminal device to transmit its own identification information. Here, the configuration of the sensor device 200 as such a terminal device will be described. As illustrated in FIG. 4, the sensor device 200 includes a processing unit 210 composed of a processor such as a CPU, and a communication unit 220. The processing unit 210 includes an identification information storage unit 211 that stores data of the identification information on the sensor device 200, and an identification information transmission unit 212 that externally transmits the identification information data. A unique serial number of the device configuring the sensor device 200 can be used as the identification information.

The communication unit 220 includes the function of receiving the identification information data from the identification information transmission unit 212 of the processing unit 210, and wirelessly transmitting the data with a predetermined communication method. In the present embodiment, the communication unit 220 is configured as a communication module including the communication function conforming to Bluetooth (registered trademark). The digital data from the identification information transmission unit 212 is transmitted as Bluetooth data via the communication unit 220 and received by the animal appearance determination device 100. The Bluetooth data is also received by the location detectors 300 installed in the cattle barn CB. The communication method described above is an example and is not limited.

The location detector 300 functions as a locator for utilizing the direction detection function included in Bluetooth 5.1. As illustrated in FIG. 4, the location detector 300 can be configured with a processing unit 310 composed of a processor, etc., an antenna array 320, and a communication unit 330. The processing unit 310 can include a radio wave receiving unit 311 and an arrival angle calculation unit 312 as functional blocks. In Bluetooth 5.1, the arrival angle of Bluetooth signals can be acquired using the angle of arrival (AoA) of the radio wave. The digital signal of Bluetooth 5.1 after regular data communication includes a monotone sine wave of constant duration, which is referred to as Constant Tone Extension (CTE). The location detector 300 includes the function of receiving the CTE by the radio wave receiving unit 311 via the antenna array 320 including the plurality of antennas, and calculating the entry angle of the Bluetooth signal, based on the difference in phase angle of the waves received at each antenna, in the arrival angle calculation unit 312. As will be described later, the arrival angle data calculated by the arrival angle calculation unit 312 of the location detector 300 is transmitted to the animal appearance determination device 100 via the communication unit 330. The location detection method for detecting the location of the sensor device 200 is not limited to a method using the Bluetooth function and can adopt other available methods, such as location detection methods using GPS or satellite positioning systems or location identification methods using radio waves from the Wi-Fi base stations.

### <<Animal Appearance Determination Device 100>>

Next, an animal appearance determination device 100, which is an embodiment of the information processing device according to the present invention, will be described. As illustrated in FIG. 3, the animal appearance determination device 100 is an information processing device such as a server computer or a personal computer, and includes a processing unit 110, a storage unit 120, an input/output unit 130, a data interface (data I/F) unit 140, and a communication unit 150. The processing unit 110, the storage unit 120, the input/output unit 130, the data I/F unit 140, and the communication unit 150 are connected by a bus as an internal communication line (not illustrated).

The processing unit 110 is an arithmetic device composed of a processor such as a CPU, which reads and executes various programs and data from the storage unit 120 (described later) to realize the functions of the animal appearance determination device 100. In the present embodiment, the processing unit 110 executes data processing of each functional unit including the image data receiving unit 111, the image data analysis unit 112, the location data receiving unit 113, the location data analysis unit 114, the individual identification unit 115, the appearance determination unit 116, the appearance information recording unit 117, and the appearance information output unit 118. The operations of each functional unit will be described later.

The storage unit 120 is a storage area for various programs and data that enable the hardware group to function as the animal appearance determination device 100 and can be composed of ROM, RAM, flash memory, solid-state drives (SSD), or hard disk drives (HDD). Specifically, the storage unit 120 stores programs for causing the processing unit 110 (control programs for the animal appearance determination device 100) to execute the functions of the present embodiment, various parameters, data used for individual identification and appearance determination, data related to the cows C as the processing target, operation input data input from external sources, and generated appearance information data.

The input/output unit 130 is composed of various input devices such as a keyboard, mouse, a touch panel, a microphone, etc., which allow data to be input into the animal appearance determination device 100 from external sources, and output devices such as a monitor display and speakers which display appearance information data, etc.

The data I/F unit 140 includes the function of controlling data communication between the processing unit 110, the storage unit 120, the input/output unit 130, and the communication unit 150.

The communication unit 150 is a communication module that transmits and receives various data with the sensor device 200 and the location detector 300, and is configured as hardware such as a network interface card (NIC). The communication unit 150 can also be used by the animal appearance determination device 100 to communicate with the external communication networks N, as illustrated in FIG. 1. Although omitted in the present embodiment, the animal appearance determination device 100 may also include various control functions for the cameras 400 installed in the cattle barn CB.

Next, the functions of the animal appearance determination device 100 implemented by the programs executed by the processing unit 110 will be described.

The image data receiving unit 111 includes the function of receiving image data captured by the cameras 400 installed in the cattle barn CB. The cameras 400 are typically digital video cameras including image sensors such as CCDs with required resolution, but are not limited to this and can be configured to capture still images at predetermined time intervals.

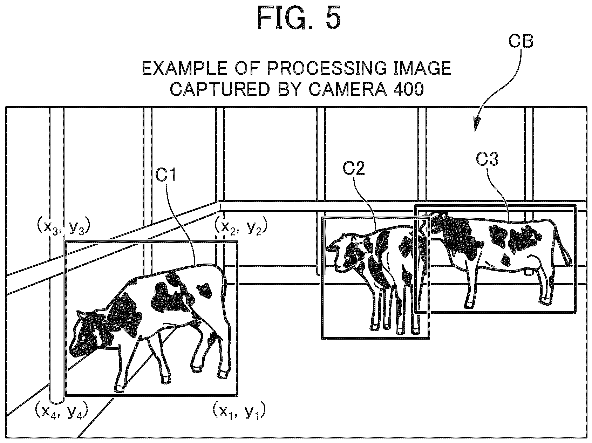

The image data analysis unit 112 includes the function of analyzing the captured image data of the cattle barn CB received by the image data receiving unit 111 using image analysis data, determining whether the cows C are included in the image, and calculating the locations of the cows C within the cattle barn CB, based on the locations in the image. FIG. 5 illustrates an example of an image of the cattle barn CB captured by the cameras 400. The image example illustrated in FIG. 5 captures three cows C1 to C3. The image data analysis unit 112 checks whether cows are captured in each image using a trained model that has been pre-trained with data of images capturing various cows stored in the image analysis data storage unit 121 of the storage unit 120, and marks a region identified as a cow in the image with a rectangle (x₁, y₁), (x₂, y₂), (x₃, y₃), (x₄, y₄), as illustrated in FIG. 5, for example. (x₁, y₁), etc., represent the coordinates of the corners of the rectangle in the screen coordinate system in the image. The training data used for pre-training is annotation data that specifies the regions capturing the cows in the image data containing images of various cows. The image data determined to contain cows C will be used as data for appearance determination, which will be described later. For images determined to contain cows C, the image data analysis unit 112 calculates the locations of the cows C within the cattle barn CB, based on the regions occupied by the cows C in the images. The position coordinates of the region occupied by the cows C in the image, that is, the coordinates of the corners of the rectangle in the screen coordinate system, are projectively transformed into the coordinates in the real space of the cattle barn CB (world coordinate system), based on the installation position coordinates of the cameras 400, the angles indicating the imaging direction, such as the angle (angle of depression) formed by the imaging direction of the cameras 400 with respect to the horizontal plane, the angles with respect to the coordinate axes in the cattle barn CB, and the angle of view of the cameras 400, thereby allowing for acquiring the location occupied by the cow C in the image within the real space, specifically within the cattle barn CB. Specifically, the conversion matrix for translating and rotating the rectangle indicating the location of the cow C in the screen coordinate system into the location in the world coordinate system is prepared for each camera 400 in advance. The location of the cows C calculated based on the image data will be used for the individual identification processing for each cow C described later.

The location data receiving unit 113 includes the function of receiving location data from the location detectors 300. As described above, the location data includes, for example, the position coordinates of each location detector 300 within the cattle barn CB and the radio wave arrival angle data from the sensor device 200 calculated by the arrival angle calculation unit 312 of each location detector 300. The position coordinate data of the location detectors 300 may be stored as parameters in the storage unit 120 in advance.

The location data analysis unit 114 calculates the location of the sensor devices 200 in the cattle barn CB using the position coordinate data and the radio wave arrival angles from the location detectors 300 received and acquired by the location data receiving unit 113. As illustrated in FIG. 1, when two sets of location detectors 300 are used, the location of the sensor device 200, which is the source of the radio waves, can be determined as the intersection of two straight lines drawn from the two location detectors 300 at the arrival angles of the radio waves, respectively. Additional location detectors 300 can be installed, depending on the required accuracy in measuring the location of the sensor devices 200. By matching the acquired location of the sensor devices 200 with the pre-set plane coordinates in the cattle barn CB, it is possible to determine where in the cattle barn CB the cow C stays, to which the sensor device 200 is attached. The locations of the sensor devices 200 in the cattle barn CB calculated by the location data analysis unit 114 are used in the individual identification processing for each cow C described later. The above-mentioned location detection method for the sensor devices 200 is an example, and other methods may also be used, such as calculating the position coordinates based on GPS (Global Positioning System) satellite signals or using radio waves from Wi-Fi base stations.

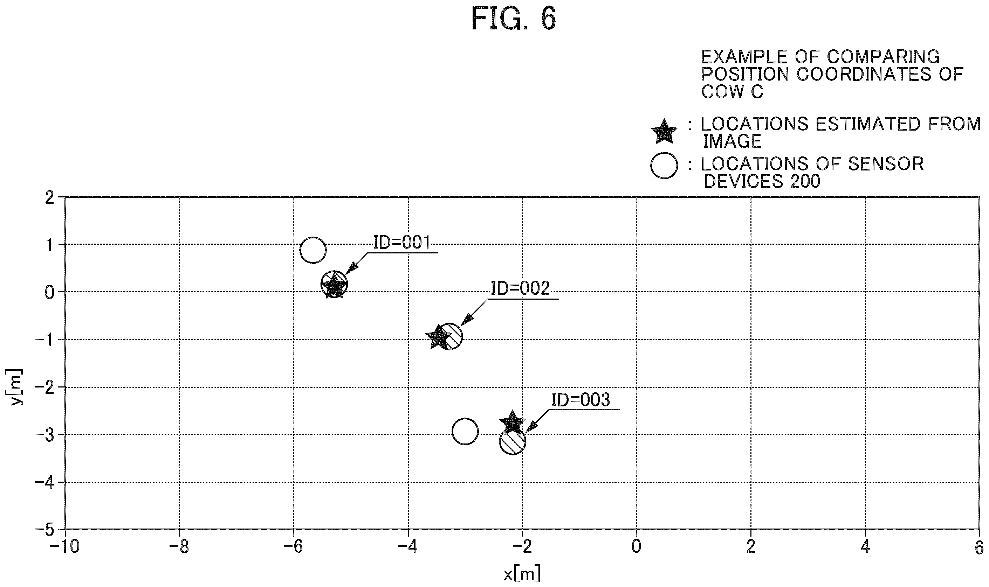

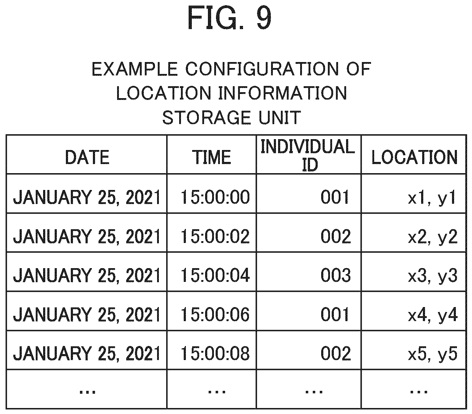

The individual identification unit 115 includes the function of identifying each cow C captured in the image by comparing the estimated location of the cow C within the cattle barn CB calculated by the image data analysis unit 112, based on the location within the image included in the image data, with the location of each sensor device 200 in the cattle barn CB calculated by the location data analysis unit 114, based on the data from the location detectors 300. As described above, the sensor device 200 attached to each cow C is assigned a sensor device ID as a unique identification information, which is received by the appearance determination device 100 via the location detectors 300. Since the sensor device ID is linked to the individual ID as an individual identification code of each cow C, comparing the location of the cow C estimated from the image data with the location of the sensor device 200 allows for determining whether the difference between the location of the cow C estimated from the image data and the location of the sensor device 200 is below or equal to a predetermined threshold (i.e., whether the two locations are sufficiently close to be within a certain range in the cattle barn CB), thus allowing for associating the cow C in the image with the individual ID (this association will be described later with respect to the configuration of the processing target data storage unit). FIG. 6 schematically illustrates the comparison between the location of the cow C within the cattle barn CB estimated from the image data and the location of the cow C calculated based on the radio waves received from the sensor device 200. In FIG. 6, the stars indicate the locations of the cows C estimated from the image data, and the circles indicate the locations of the cows C calculated based on the radio waves received from the sensor devices 200. The number of the cows C based on the image data is smaller than the number of the sensor devices 200, which indicates that some of the cows C within the cattle barn CB were not detected in the images captured by the camera 400. FIG. 6 illustrates that three cows (individual IDs = 001 to 003) marked with hatched circles are associated with the locations of the cows C estimated from the image data (stars). Thus, the individual identification unit 115 can identify which specific individual corresponds to the cow C captured in the image. The location information identified for each cow C is recorded in the location information storage unit 123 illustrated in FIG. 9, as a record in association with the recording date and time, the individual ID of the cow C, and the location in the cattle barn CB.

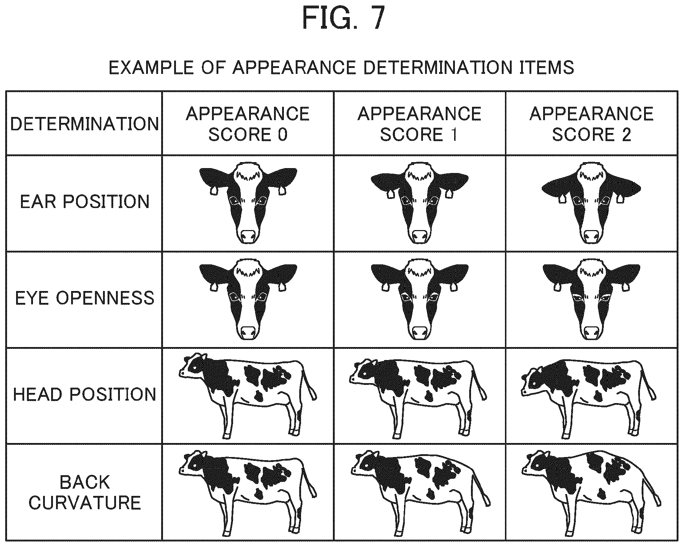

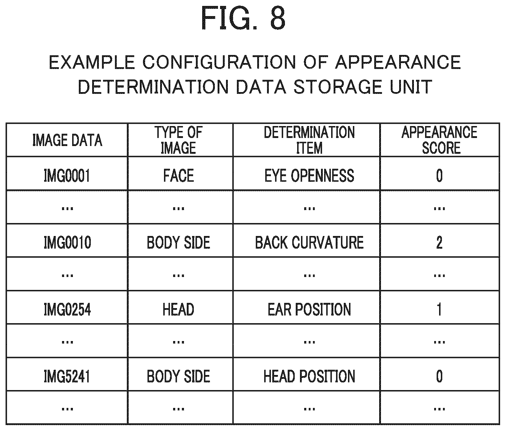

The appearance determination unit 116 includes the function of quantitatively determining the appearance of the cow C, based on the image data of the cow C captured by the camera 400. Quantitatively determining the appearance of each cow C can be used for health management, disease prevention, etc. of each cow C. FIG. 7 illustrates the appearance determination items for appearance determination in the present embodiment. In the present embodiment, appearance determination items for calves are illustrated as an example, and four items, "ear position", "eye openness", "head position", and "back curvature", are determined in three stages including appearance scores 0 (best determination) to 2. For each item, the higher the ear position, the better; the more open the eyes, the better; the higher the head position, the better; and the straighter the back, the better. The determination items can be appropriately changed based on the appearance determination target, such as parous cows. The appearance determination unit 116 executes the determination processing using the appearance determination data stored in the appearance determination data storage unit 122 for the image data containing the cow C framed by the image data analysis unit 112. FIG. 8 illustrates an example configuration of the appearance determination data storage unit 122. The appearance determination data illustrated in FIG. 8 includes image data containing the cows C, the types of appearances of the cows C included in the images such as the face and body side, determination items such as eye openness, and the appearance scores assigned to the determination items of the corresponding image data. The appearance determination unit 116 can determine the appearance score for the target image, based on the similarity of the determination items by comparing the image of the target cow C with the appearance determination data. The appearance determination method is not limited and can include:
- Pre-deriving quantitative indicators based on determination items such as "ear position" and "eye openness" from the accumulated images of multiple cows C, and executing appearance determination based on the quantitative indicators. For example, in the case of "ear position," the criteria for determination can be quantified so that appearance scores can be assigned based on the degree of ear drooping (the angle of ear drop) from the horizontal line.
- Executing appearance determination for new images of cows C using a trained model that has been pre-trained with the relationship between the images of appearances of the cows C and the appearance scores for the determination items, based on the appearance determination data.

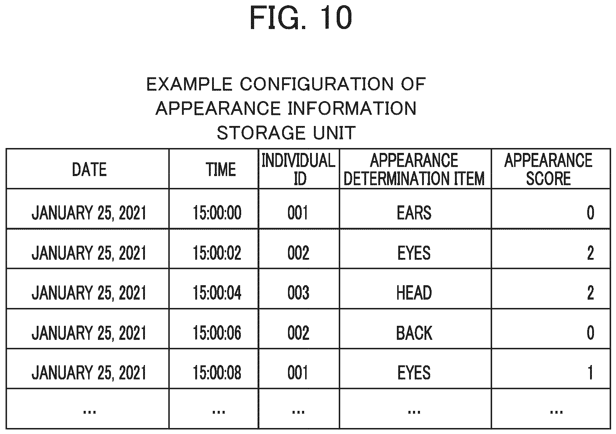

The appearance information recording unit 117 includes the function of chronologically recording the appearance determination results for each cow C generated by the appearance determination unit 116 as appearance information. The appearance information is recorded in the appearance information storage unit 124 of the storage unit 120. FIG. 10 illustrates an example configuration of the appearance information storage unit 124. The appearance information storage unit 124 illustrated in FIG. 10 records the date and time of recording the appearance information, the individual ID of the cow C, the appearance determination items, and the appearance scores, in association with each other.

The appearance information output unit 118 includes the function of extracting and outputting appearance information data from the appearance information storage unit 124 under predetermined conditions, based on input operations from the input/output unit 130 or the like. For example, by extracting and outputting, as chronological data, the appearance scores corresponding to specific appearance determination items for a cow C with a specific individual ID, it is possible to use this data to recognize changes in health conditions, signs of diseases, or specific events (such as weaning or calving) of the cow C.

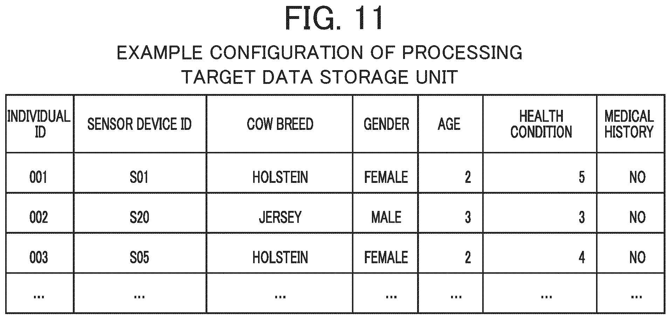

The processing target data storage unit 125 stores individual information on each cow C as the appearance determination target. FIG. 11 illustrates an example configuration of the processing target data storage unit 125. The processing target data storage unit 125 illustrated in FIG. 11 records the sensor device ID, which is the unique identification information on the sensor devices 200, the breed of the cow indicating the type of cow, gender, age, health conditions, and medical history, in association with the individual ID assigned to each cow C as the appearance determination target. The sensor device ID is included with the sensor data transmitted from each sensor device 200 attached to the cow C to the animal appearance determination device 100, allowing for identifying which sensor device 200 has acquired the received sensor data. The sensor device ID is also received by the location detectors 300, allowing the location of the specific sensor device 200 to be linked with the sensor device ID. The health conditions are recorded as determined numerical values as illustrated, or may be recorded in specific text. The medical history may also be recorded in an appropriate format. The recorded items in the processing target data storage unit 125 are not limited to the example illustrated in FIG. 11 and can be appropriately determined.

### <Data Processing by Animal Appearance Determination Device 100>

Next, the data processing executed by the animal appearance determination device 100 in the present embodiment will be described. The animal appearance determination device 100 mainly executes the location information calculation processing to detect the location of the animals (cows in the present embodiment) captured in the images, and the appearance determination processing to determine the appearance of the animals, based on the images.

### <<Location Information Calculation Processing>>

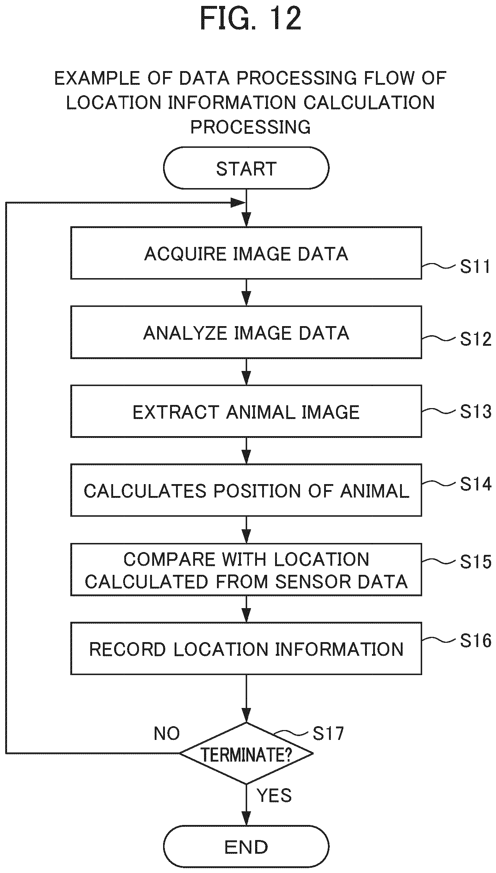

FIG. 12 is a flowchart illustrating an example of the processing flow of the location information calculation processing executed by the animal appearance determination device 100 in the present embodiment. The location information calculation processing starts, for example, upon power-on and startup of the animal appearance determination device 100, and is executed at regular time intervals.

The image data receiving unit 111 of the animal appearance determination device 100 receives the image data captured by the camera 400 from the camera 400 (Step S11).

The image data analysis unit 112 analyzes the image data received from the camera 400 using the image analysis data stored in the image analysis data storage unit 121 (Step S12) and extracts the image region of the cow C in the image (Step S13) .

The image data analysis unit 112 converts the region occupied by the cow C in the image into a position within the spatial coordinate system, using the relationship between the screen coordinate system, the position of the camera 400, the camera coordinate system based on the imaging direction, and the real-world spatial coordinate system, and calculates the position of the cow C within the cattle barn CB (Step S14).

Meanwhile, the location data analysis unit 114 calculates the location of each sensor device 200 as the location of the cow C from the angle of arrival of the radio waves from the location detectors 300 received by the location data receiving unit 113, and compares the calculated location with the location of the cow C estimated in Step S14 based on the image data (Step S15). As a result, the location of the cow C estimated from the image data is verified by the location of the sensor device 200, i.e., the location of the cow C to which the sensor device 200 is attached, thus achieving individual identification of each cow C captured in the image. The location of the cow C can be verified by first assuming that the first location information indicating the location of the cow C estimated from the image data is the location of the cow C within the cattle barn CB, and checking whether there is a corresponding sensor device 200 location, i.e., whether the position coordinates of any sensor device 200 are detected within a certain range from the position coordinates of the cow C estimated from the image data. Alternatively, the location of the cow C can also be verified by first assuming that the location of the sensor device 200 is the location of the cow C within the cattle barn CB, and checking whether there is corresponding first location information indicating the location of the cow C estimated from the image data, i.e., whether the position coordinates of any cow C estimated from the image data are detected within a certain range from the position coordinates of the sensor device 200.

The location data analysis unit 114 records the location of the cow C identified in Step S15 in the location information storage unit 123 (Step S16).

The processing unit 110 determines whether a command to terminate the data processing has been received through the input/output unit 130 or the communication unit 150 (Step S17). If it is determined that no termination command has been received (Step S17: NO), the processing unit 110 returns to Step S11 and continues executing the location information calculation processing. If it is determined that a termination command has been received (Step S17: YES), the processing unit 110 terminates the location information calculation processing.

### <<Appearance Determination Processing>>

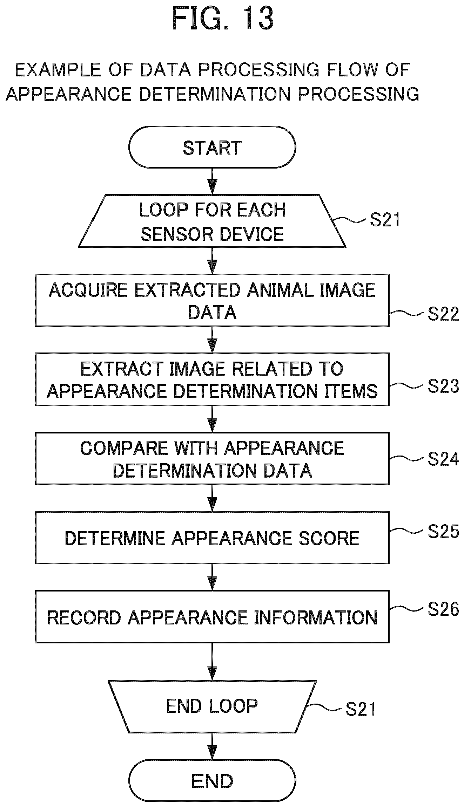

FIG. 13 is a flowchart illustrating an example of the processing flow of the appearance determination processing executed by the animal appearance determination device 100 in the present embodiment. The appearance determination processing starts, for example, upon power-on and startup of the animal appearance determination device 100, and is executed at regular time intervals.

The appearance determination processing by the animal appearance determination device 100 is repeatedly executed for each sensor device 200 attached to the cow C while the animal appearance determination device 100 is in operation (loop of Step S21). The appearance determination unit 116 acquires the image of the cow C extracted from the image data by the image data analysis unit 112 (Step S22). The appearance determination unit 116 extracts the image related to the appearance determination items from the acquired image of the cow C (Step S23). Specifically, the appearance determination unit 116 checks whether the acquired image includes the head, face, and body side of the cow C, and whether the "head", "ears", "eyes", and "back" relevant to the appearance determination items are identifiable. This determination can use, for example, a trained model that has been pre-trained with massive training data containing "head", "ears", "eyes", and "back" of the cows C. When acquiring the images of the cows C, it is preferable to thoroughly capture the body parts relevant to the appearance determination items of each cow C. From this viewpoint, for example, it is preferable to install a plurality of cameras 400 in the cattle barn CB where the cow C is being bred, and capture the cattle barn CB from a plurality of different directions. Alternatively, it is conceivable to configure the camera 400 to emit sound, light, etc., to draw the attention of the cow C to the camera 400 during imaging.

The appearance determination unit 116 compares the extracted image related to the appearance determination items with the appearance determination data read from the appearance determination data storage unit 122 (Step S24). Specifically, as described above, the appearance determination unit 116 checks the similarity with the appearance determination data in terms of the four items of "ear position", "eye openness", "head position", and "back curvature". Alternatively, the processing to determine the appearance of a new image of the cow C is executed using a trained model that has been pre-trained with the relationship between the images of the appearances of the cows C and the appearance scores for the determination items, based on the appearance determination data for comparison with the quantitative indicators pre-derived based on each determination item.

The appearance determination unit 116 determines the appearance score for each determination item, based on the comparison result of Step S24 (Step S25), and the appearance information recording unit 117 records the score as appearance information in the appearance information storage unit 124 (Step S26) .

The location information calculation processing and the appearance determination processing are executed, thereby chronologically accumulating the appearance scores for the appearance determination items "ear position", "eye openness", "head position", and "back curvature" for each cow C.

### <Utilization of Appearance Determination Results by Animal Appearance Determination Device 100>

As described above, the animal appearance determination device 100 according to the present embodiment chronologically accumulates the determination indicators and the appearance scores related to the appearance determination items "ear position", "eye openness", "head position", and "back curvature" selected for each cow C. Therefore, for example, by analyzing the correlation between the temporal changes in the appearance scores related to "ear position", "eye openness", "head position", and "back curvature" and the health conditions, disease incidence, estrus, calving, weaning, etc., of the cows C, and pre-training the animal appearance determination device 100 with the correlation, the animal appearance determination device 100 in the present embodiment can be used for the purpose of detecting signs of changes in health conditions, disease incidence, estrus, calving, weaning, etc., of the cows C. In the present embodiment, the images of the cows C within the cattle barn CB are regularly captured, but each cow C is basically in a natural state. In a case of continuing capturing images in such a state, and a specific cow C is in poor health, moves less, or does not change its posture much, for example, it can be assumed that there will be fewer images available for the appearance determination items, or fewer images for specific appearance determination items for that specific cow C. In other words, it is considered that changes in health conditions, etc., can be predicted not only by the temporal changes in the appearance scores of the cows C but also by the temporal changes in the number of images related to the appearance determination items.

According to the embodiment described above, the following effects can be achieved.

The animal appearance determination device 100 according to one embodiment of the present invention includes: the image data analysis unit 112 that acquires captured images including the cows C being bred in the cattle barn CB, and calculates the locations of the cows C in the breeding area, based on the images of the cows C in the captured images, as the first location information; the location data analysis unit 114 that acquires identification information and second location information indicating the location of the cows C within the cattle barn CB from the sensor devices 200 provided on the cows C; and the individual identification unit 115 that associates and records the identification information on the first location information and the second location information in a case of determining that the difference between the first location information and the second location information is below or equal to a predetermined threshold.

This ensures that the locations of the cows C within the cattle barn CB can be accurately determined based on the captured images of the cows C within the cattle barn CB, allowing for individual identification of the cows C, based on the captured images.

The animal appearance determination device 100 may include the appearance determination unit 116 that determines the preset appearance determination items related to the appearance of the animal, based on the captured image of the animal, uses the determination results as the appearance information on the animal, acquires the first location information calculated from the image of the animal as the target of the determination, and associates and records the identification information corresponding to the second location information associated with the first location information, and the appearance information.

This ensures that changes in appearance of each of the individually identified cows C can be chronologically recorded.

The appearance determination unit 116 may determine the appearance of the cows C using a trained model that has been pre-trained with the relationship between the image information acquired for the cows C and the appearance information, which is the determination result for the preset appearance determination items.

This ensures that the appearance of each cow C can be automatically determined.

The appearance determination unit 116 may determine the appearance of the cows C, based on the acquired images of the cows C and the preset criteria for determining the features of the cows C in the images related to the appearance determination items.

This ensures that the appearance of each cow C can be automatically determined.

The location information compared with the location estimated from the images of the cows C can be calculated based on the direction of arrival of the radio waves transmitted from the sensor devices 200 provided on the cows C.

This ensures that the locations of the sensor devices 200, and hence the locations of the cows C, can be detected using the radio waves used for data transmission from the sensor devices 200.

The appearance information on each individual cow chronologically recorded by the appearance determination unit may be used for predicting a point in time of at least one of disease, estrus, calving, growth, or weaning of the animal.

This ensures that events such as disease, estrus, calving, growth, and weaning can be timely identified without missing any occurrences by determining the appearance of the animal.

The series of processing described above can be executed by hardware or by software. In other words, the functional configurations illustrated in FIGS. 2 and 3 are merely illustrative and are not particularly restrictive. That is, the animal appearance determination device 100 only needs to include the functions capable of executing the series of processing described above as a whole, and the specific functional blocks used for implementing the functions are not limited to the examples illustrated in FIGS. 2 and 3. A single functional block may be configured solely by hardware, solely by software, or by a combination of both. The functional configurations in the present embodiment are implemented by the processor that executes arithmetic processing. The processor usable in the present embodiment includes not only various processing devices such as single processors, multiprocessors, and multicore processors alone, but also combinations of these processing devices with processing circuits such as ASICs (Application Specific Integrated Circuits) or FPGAs (Field-Programmable Gate Arrays).

When executing the series of processing by software, the program constituting the software is installed on a computer from a network or recording medium. The computer may be a computer embedded in dedicated hardware. The computer may also be a computer capable of executing various functions by installing various programs, such as a general-purpose personal computer.

The recording medium containing such a program may be configured not only by removable media such as USB memory distributed separately from the device body to provide the program to the user but also by recording media provided to the user in a state pre-installed in the device body. Removable media may be configured by, for example, magnetic disks (including floppy disks), optical disks, or magneto-optical disks. The optical disks may be configured by, for example, CD-ROMs (Compact Disk-Read Only Memory), DVDs (Digital Versatile Disks), Blu-ray (registered trademark) Discs, etc. The magneto-optical disks may be configured by MDs (Mini-Disks), etc. The recording media provided to the user in a state pre-installed in the device body may be configured by, for example, ROMs or hard disks included in the storage unit 120 where the program is recorded.

In this specification, the steps describing the program recorded on the recording medium include not only the processing executed in chronological order but also processing executed in parallel or individually, not necessarily in chronological order.

Although some embodiments of the present invention have been described above, these embodiments are merely examples and do not limit the technical scope of the present invention. The present invention can take various other embodiments, and the configurations of the embodiments and modifications can be combined. Furthermore, various changes such as omissions and substitutions can be made without departing from the spirit of the present invention. These embodiments and their modifications are included in the scope and spirit of the invention described in this specification and are also included in the scope of the invention described in the claims and their equivalents.

### EXPLANATION OF REFERENCE NUMERALS

1: animal appearance determination system
100: animal appearance determination device
110: processing unit
115: individual identification unit
116: appearance determination unit
120: storage unit
122: appearance determination data storage unit
124: appearance information storage unit
200: sensor device
300: location detector
400: camera

## Claims

1. An information processing device, comprising:
a first location information acquisition unit that acquires a captured image including an animal being bred within a predetermined breeding area, and acquires, as first location information, a location of the animal within the breeding area, calculated based on the image of the animal in the captured image;
a second location information acquisition unit that acquires, from a terminal device provided on the animal, identification information on the animal and second location information indicating the location of the animal within the breeding area; and
an individual identification unit that, in a case of determining that a difference between the first location information and the second location information is below or equal to a predetermined threshold, associates and records the first location information and the identification information related to the second location information.

2. The information processing device according to claim 1, further comprising an appearance determination unit that executes determination on preset appearance determination items regarding an appearance of the animal, based on the captured image of the animal, uses a determination result thereof as appearance information on the animal, acquires the first location information calculated from the image of the animal that is a target of the determination, and associates and records the identification information related to the first location information and the appearance information.

3. The information processing device according to claim 2, wherein the appearance determination unit determines an appearance of the animal using a trained model that has been pre-trained with a relationship between an image acquired of the animal and appearance information that is the determination result for the preset appearance determination items.

4. The information processing device according to claim 2, wherein the appearance determination unit determines an appearance of the animal, based on an image acquired of the animal and a preset criterion for determining a feature of the animal in the image related to the appearance determination items.

5. The information processing device according to any one of claims 1 to 4, wherein the second location information is calculated based on a direction of arrival of radio waves transmitted from the terminal device provided on the animal.

6. The information processing device according to any one of claims 2 to 5, wherein the appearance information on each individual animal chronologically recorded by the appearance determination unit is used for predicting a point in time of at least one of disease, estrus, calving, growth, or weaning of the animal.

7. An information processing method executed by an information processing device, the method comprising the processing of:
acquiring a captured image including an animal being bred within a predetermined breeding area, and acquiring, as first location information, a location of the animal within the breeding area calculated based on an image of the animal in the captured image;
acquiring, from a terminal device provided on the animal, identification information on the animal and second location information indicating a location of the animal within the breeding area; and
associating and recording the first location information and the identification information related to the second location information, in a case of determining that a difference between the first location information and the second location information is below or equal to a predetermined threshold.

8. A program that causes an information processing device to execute the processing of:
acquiring a captured image including an animal being bred within a predetermined breeding area, and acquiring, as first location information, a location of the animal within the breeding area calculated based on an image of the animal in the captured image;
acquiring, from a terminal device provided on the animal, identification information on the animal and second location information indicating a location of the animal within the breeding area; and
associating and recording the first location information and the identification information related to the second location information, in a case of determining that a difference between the first location information and the second location information is below or equal to a predetermined threshold.
